# FASCICULE DE BREVET EUROPEEN

(11) **EP 3 036 687 B1**
(45) Date de publication et mention de la délivrance du brevet: **05.05.2021**
(21) Numéro de dépôt: 14787219.6
(22) Date de dépôt: 12.08.2014
(51) Int. Cl.: G06K 9/00

(54) **DISPOSITIF DE DECISION PREVU POUR DECIDER SI UN OEIL EST VRAI OU FAUX**
ENTSCHEIDUNGSVORRICHTUNG ZUR ENTSCHEIDUNG ÜBER DIE ECHTHEIT EINES AUGES
DECISION DEVICE PROVIDED TO DECIDE WHETHER AN EYE IS REAL OR FALSE

(30) Priorité: 23.08.2013 FR 1358150
(43) Date de publication de la demande: 29.06.2016
(73) Titulaire: Idemia Identity & Security France, 92400 Courbevoie (FR)
(72) Inventeur: PEYRONNEAUD, Benjamin, 92445 Issy Les Moulineaux (FR); COTTEZ, Charlotte, 92445 Issy Les Moulineaux (FR); GUILLEMOT, Florence, 92445 Issy Les Moulineaux (FR); RAGOT, Marcelin, 92445 Issy Les Moulineaux (FR)
(74) Mandataire: Cabinet Le Guen Maillet
(86) Numéro de dépôt international: PCT/FR2014/052084
(87) Numéro de publication internationale: WO 2015/025103

(56) Documents cités:
- US-A1- 2008 253 622
- Bori Toth: "Liveliness Detection: Iris" In: Stan Z. Li: "Encyclopedia of Biometrics", 1 janvier 2009 (2009-01-01), Springer, XP002724092, vol. 2, pages 931-938, colonne de gauche, ligne 5 - page 938, ligne 9
- Ryan Rakvic et al: "Iris Acquisition Device" In: Stan Z. Li: "Encyclopedia of Biometrics", 1 janvier 2009 (2009-01-01), Springer, XP002724093, vol. 2, pages 761-769, page 768, colonne de gauche, alinéa 1
- David Usher et al: "Simultaneous Capture of Iris and Retina for Recognition" In: Stan Z. Li: "Encyclopedia of Biometrics", 1 janvier 2009 (2009-01-01), Springer, XP002724094, vol. 2, pages 1212-1217, Cité pour montrer que la technique semble suffisamment exposée; le document en entier
- David Usher et al.: "Occular Biometrics: Simultaneous Capture and Analysis of the Retina and Iris" In: Nalini K. Ratha: "Advances in Biometrics", 1 janvier 2007 (2007-01-01), Springer, XP002724098, pages 133-155, Cité pour montrer que la technique semble suffisamment exposée; le document en entier

## Description

La présente invention concerne un dispositif de décision prévu pour décider si un œil est vrai ou faux, ainsi qu'un procédé de décision mis en œuvre par un tel dispositif de décision.

Elle trouve application dans le domaine de la reconnaissance biométrique et en particulier dans le domaine de l'identification par reconnaissance de l'iris des yeux.

La reconnaissance de l'iris d'un œil est utilisée pour sécuriser des installations comme par exemple des bâtiments ou des machines. Cette technologie permet de s'affranchir de codes d'accès ou de cartes qui peuvent être volés ou falsifiés. L'utilisation de cette technologie permet de renforcer la sécurité dans la mesure où la probabilité que deux personnes aient deux iris identiques est quasiment nulle.

La reconnaissance de l'iris peut être basée sur la comparaison de l'image de l'iris de l'utilisateur avec un ensemble d'images d'iris de référence stockées dans une base de données ou sur la comparaison d'un code relatif à l'iris avec un ensemble de codes stockés dans une base de données. Les codes sont générés par un algorithme à partir de l'image de l'iris et contiennent un ensemble d'informations caractéristiques à l'image de l'iris. Comme pour les images d'iris, ces codes sont uniques pour chaque individu. Ces codes peuvent être considérés comme des modèles représentatifs des iris correspondants.

Bien que le piratage des dispositifs de reconnaissance d'iris soit difficile, il n'est pas impossible.

En effet, certains pirates réalisent des leurres, comme par exemple une photo ou un œil en matière synthétique sur lequel est reproduit l'iris à imiter. Le pirate peut alors placer le leurre devant le dispositif d'acquisition du dispositif de reconnaissance d'iris qui est alors trompé.

Pour pallier ce type de piratage, plusieurs solutions ont déjà été envisagées mais toutes présentent certaines faiblesses. Le document US-A-2008/253622 divulgue un procédé de capture d'image d'iris.

Un objet de la présente invention est de proposer un dispositif de décision permettant de décider si un œil est vrai ou faux et qui ne présente pas les inconvénients de l'art antérieur.

A cet effet, est proposé un dispositif de décision prévu pour décider si un œil présentant une macula et un axe optique est vrai ou faux, ledit dispositif de décision comportant :
- des moyens d'éclairage émettant vers l'œil un flux infrarouge selon un axe d'entrée,
- un moyen de capture infrarouge prévu pour capturer une image de l'œil selon un axe de sortie, l'axe d'entrée et l'axe de sortie étant alignés avec l'axe optique tel que la macula éclairée par les moyens d'éclairage sous l'incidence de l'axe d'entrée est vue par le moyen de capture,
- des moyens de traitement prévus pour détecter, sur une image capturée par le moyen de capture, si une zone périphérique représentative de l'iris existe et si une zone centrale à l'intérieur de la zone périphérique et dont la couleur est représentative de l'existence de la macula existe, et pour délivrer une information représentative de cette détection, et
- des moyens de décision prévus pour décider si l'œil est vrai ou faux en fonction de l'information délivrée par les moyens de traitement.

Avantageusement, le dispositif de décision comporte en outre, des moyens de tracking prévus pour suivre un visage d'un individu passant devant les moyens d'éclairage et le moyen de capture, pour localiser un œil de ce visage et déterminer la direction de l'axe optique de cet œil, et des moyens de positionnement commandés par les moyens de tracking et prévus pour aligner l'axe d'entrée, l'axe de sortie avec l'axe optique.

Avantageusement, le dispositif de décision comporte en outre des moyens de décalage commandés par les moyens de tracking et prévus pour décaler l'axe d'entrée et l'axe de sortie par rapport à l'axe optique de manière à ce que même si la macula reste partiellement éclairée par les moyens d'éclairage, elle n'est plus vue par le moyen de capture.

Avantageusement, les moyens d'éclairage présentent une direction d'émission, le moyen de capture présente une direction de réception, la direction d'émission et la direction de réception sont verticales, l'axe optique est horizontal, les moyens de positionnement comportent, d'une part, un socle sur lequel est monté un miroir à 45° disposé à la verticale des moyens d'éclairage et du moyen de capture, et, d'autre part, un moyen de déplacement linéaire prévu pour déplacer linéairement le socle parallèlement à la direction d'émission, et les moyens de décalage comportent un moyen de déplacement angulaire monté sur le socle et portant le miroir.

L'invention propose également un procédé de décision prévu pour décider si un œil présentant une macula et un axe optique est vrai ou faux et mis en œuvre par un dispositif de décision comportant des moyens d'éclairage émettant un flux infrarouge selon un axe d'entrée, un moyen de capture infrarouge prévu pour capturer une image selon un axe de sortie, des moyens de traitement, et des moyens de décision, ledit procédé de décision comportant:
- une étape d'alignement au cours de laquelle l'axe d'entrée et l'axe de sortie sont alignés avec l'axe optique tel qu'un éclairement de la macula par les moyens d'éclairage sous l'incidence de l'axe d'entrée est vu par le moyen de capture,
- une étape d'éclairage au cours de laquelle les moyens d'éclairage éclairent l'œil,
- une étape de capture au cours de laquelle le moyen de capture capture une image de la zone de l'œil ainsi éclairée,
- une étape de traitement au cours de laquelle les moyens de traitement détectent sur une image ainsi capturée, si une zone périphérique représentative de l'iris existe et si une zone centrale à l'intérieur de la zone périphérique et dont la couleur est représentative de l'existence de la macula existe, et délivrent une information représentative de cette détection, et
- une étape de décision au cours de laquelle les moyens de décision décident si l'œil est vrai ou faux en fonction de l'information délivrée par les moyens de traitement.

Avantageusement, lorsque le dispositif de décision comporte des moyens de tracking et des moyens de positionnement commandés par les moyens de tracking, l'étape d'alignement consiste en une étape de suivi du visage, une étape de localisation d'un œil de ce visage ainsi suivi, une étape de détermination de la direction de l'axe optique de cet œil, et une étape de positionnement au cours de laquelle les moyens de positionnement alignent l'axe d'entrée et l'axe de sortie avec l'axe optique.

Avantageusement, le dispositif de décision comporte en outre des moyens de décalage commandés par les moyens de tracking et ledit procédé de décision comporte après l'étape de traitement :
- une étape de désalignement au cours de laquelle les moyens de décalage décalent l'axe d'entrée et l'axe de sortie de l'axe optique de manière à ce que même si la macula reste partiellement éclairée par les moyens d'éclairage, elle n'est plus vue par le moyen de capture,
- une deuxième étape d'éclairage au cours de laquelle les moyens d'éclairage éclairent l'œil,
- une deuxième étape de capture au cours de laquelle le moyen de capture capture une image de la zone de l'œil ainsi éclairée,
- une deuxième étape de traitement au cours de laquelle les moyens de traitement détectent sur une image ainsi capturée si une zone périphérique représentative de l'iris existe et si une zone centrale à l'intérieur de la zone périphérique et dont la couleur est représentative de l'existence de la macula existe, et délivrent une deuxième information représentative de cette détection, et au cours de l'étape de décision les moyens de décision décident si l'œil est vrai ou faux en fonction de ladite information et de ladite deuxième information délivrées par les moyens de traitement.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 représente une vue schématique d'un dispositif de décision selon l'invention,
la Fig. 2 montre une image d'un œil véritable tel qu'il est vu par le dispositif de décision,
la Fig. 3 montre une image d'un faux œil tel qu'il est vu par le dispositif de décision,
la Fig. 4 est un algorithme d'un procédé de décision selon un premier mode de réalisation de l'invention, et
la Fig. 5 est un algorithme d'un procédé de décision selon un deuxième mode de réalisation de l'invention.

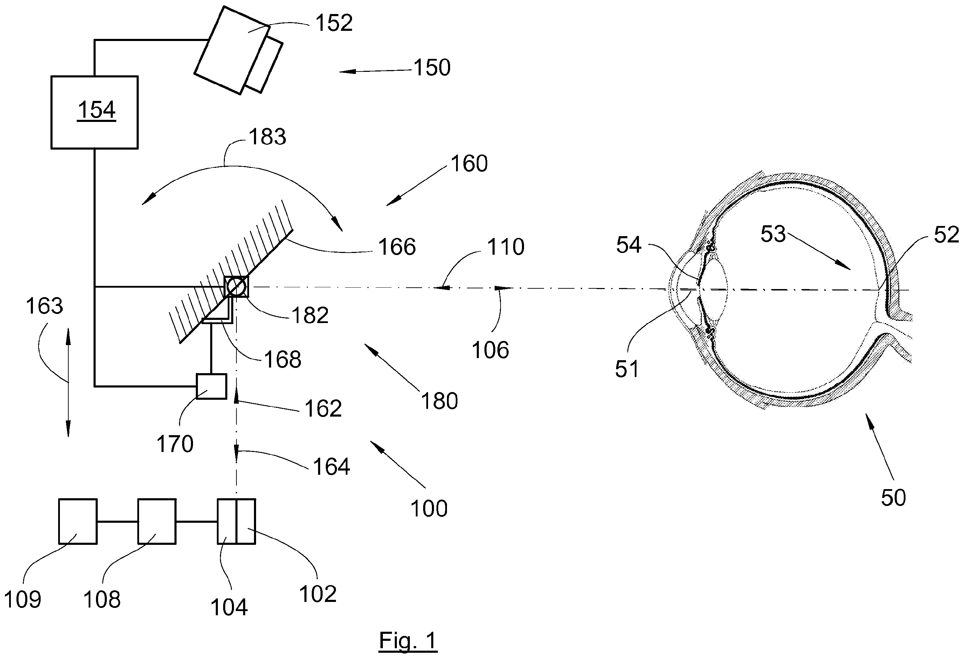

La Fig. 1 montre un dispositif de décision 100 selon l'invention qui est orienté vers un œil 50. Dans la suite de la description, un seul œil 50 est présenté et le dispositif de décision 100 est assujetti à cet œil 50 mais l'invention fonctionne de la même manière s'il y a deux yeux 50 et un dispositif de décision 100 pour chaque œil 50.

Dans la suite de la description, les flux infrarouges sont représentés comme présentant une épaisseur nulle, mais ces faisceaux infrarouges doivent être compris comme présentant une certaine épaisseur.

Un vrai œil 50 présente classiquement un iris 54 et une fovéa 52 qui est la zone centrale de la macula 53 et un axe optique 51 qui passe par le centre de la pupille et la fovéa 52.

Le dispositif de décision 100 est prévu pour décider si l'œil est vrai ou faux.

Le dispositif de décision 100 comprend des moyens d'éclairage 102 prévus pour éclairer l'œil 50 avec un flux infrarouge selon un axe d'entrée 106.

Le dispositif de décision 100 comprend un moyen de capture infrarouge 104 prenant ici la forme d'une caméra infrarouge 104 qui est ici couplée aux moyens d'éclairage 102.

Le moyen de capture infrarouge 104 est prévu pour capturer une image de l'œil 50 selon un axe de sortie 110.

L'axe d'entrée 106 et l'axe de sortie 110 sont alignés avec l'axe optique 51 tel que la macula 53 éclairée par les moyens d'éclairage 102 sous l'incidence de l'axe d'entrée 106 est vue par le moyen de capture 104. L'alignement de l'axe optique 51, de l'axe d'entrée 106 et de l'axe de sortie 110 assure donc que le moyen de capture 104 visualise la macula 53 éclairée.

Géométriquement cet alignement consiste à positionner l'axe d'entrée 106 à l'intérieur d'un cône dont le sommet est la fovéa 52, dont l'axe est l'axe optique 51 et dont le demi-angle au sommet est de 5°. L'axe de sortie 110 se trouve également à l'intérieur de ce cône.

Pour des raisons de simplification de la Fig. 1, l'axe d'entrée 106 et l'axe de sortie 110 sont représentés confondus.

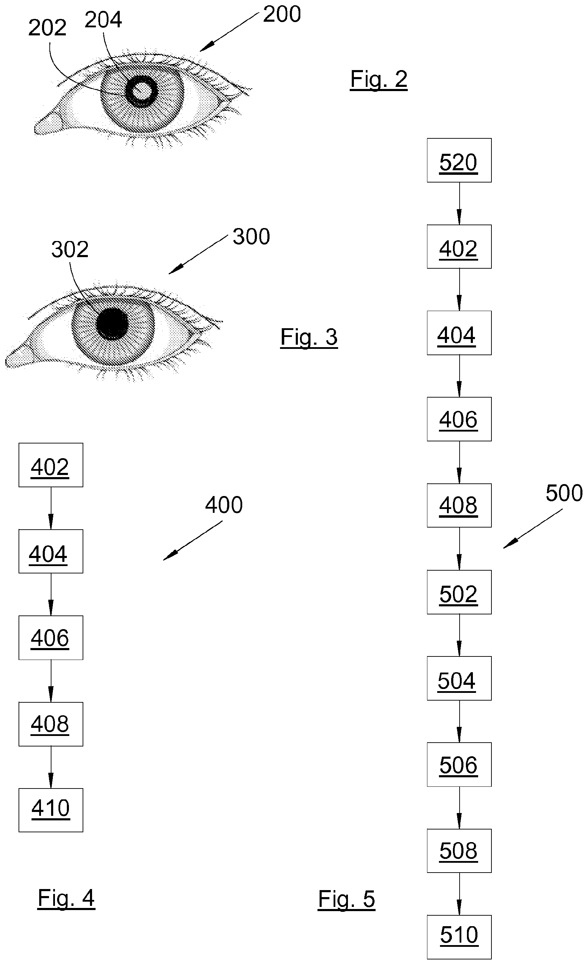

La Fig. 2 montre une image 200 capturée par le moyen de capture 104 dans le cas d'un vrai œil et la Fig. 3 montre une image 300 capturée par le moyen de capture 104 dans le cas d'un faux œil.

Dans le cas d'un vrai œil, l'image 200 présente une zone périphérique 202 représentant l'iris 54 et une zone centrale 204 représentant la macula 53 à l'intérieur de la zone périphérique 202. La couleur de la zone périphérique 202 est différente de la couleur de la zone centrale 204. Dans le cas d'une image en noir et blanc, la zone périphérique 202 est globalement noire tandis que la zone centrale 204 est globalement grise.

Dans le cas du faux œil, l'image 300 présente une zone unique 302 car le faux œil n'a pas de macula 53 pouvant réfléchir le flux infrarouge. La zone unique 302 présente alors une couleur globalement noire.

Le dispositif de décision 100 comprend également des moyens de traitement 108 qui reçoivent chaque image capturée 200, 300 par le moyen de capture 104. Les moyens de traitement 108 sont prévus pour analyser une image 200, 300 ainsi capturée et pour détecter, sur une image capturée 200, 300 si une zone périphérique 202 représentative de l'iris 54 existe et si une zone centrale 204 à l'intérieur de la zone périphérique 202 et dont la couleur est représentative de l'existence de la macula 53 existe, et pour délivrer une information représentative de cette détection.

Le dispositif de décision 100 comprend également des moyens de décision 109 prévus pour décider si l'œil 50 est vrai ou faux en fonction de l'information délivrée par les moyens de traitement 108.

Une telle détection peut être réalisée par tout logiciel permettant de détecter des formes spécifiques et des couleurs spécifiques dans une image d'œil (zone grise ou blanche en lieu et place d'une zone noire sur un faux).

Le dispositif de décision 100 permet ainsi de décider si l'œil 50 présent est vrai ou faux.

Bien sûr, la couleur de la zone centrale 204 et la couleur de la zone périphérique 202 ou de la zone unique 302 dépendent des caractéristiques du moyen de capture 104. En particulier, le dispositif de décision 100 est étalonné de manière à ce que la couleur "grise" de la zone centrale 204 corresponde à une couleur rouge de macula 53. Dans un mode de réalisation particulier, une zone centrale 204 dont la valeur LSB de la couleur est supérieure à 128 (gris à blanc) est considérée comme représentative de la présence d'une macula 53 et donc d'un vrai œil 50.

Le dispositif de décision 100 peut être utilisé dans le cas d'un œil 50 qui est immobile et placé de manière à ce que son axe optique 51 soit aligné avec l'axe d'entrée 106 et à ce que sa macula 53 soit ainsi éclairée par les moyens d'éclairage 102.

Mais de manière préférentielle, le dispositif de décision 100 est utilisé pour effectuer une décision à la volée.

A cette fin, le dispositif de décision 100 comprend des moyens de tracking 150 et des moyens de positionnement 160 commandés par les moyens de tracking 150.

Les moyens de tracking 150 sont prévus pour suivre le visage de l'individu passant devant le dispositif de décision 100, plus particulièrement devant les moyens d'éclairage 102 et le moyen de capture 104, pour localiser au moins un œil 50 de ce visage et déterminer la direction de l'axe optique 51 de cet œil 50.

De tels moyens de tracking 150 comportent ici une caméra de suivi 152 et une unité de calcul 154. La caméra de suivi 152 capture des images du visage et l'unité de calcul 154 détermine la direction de l'axe optique 51 de l'œil 50 à partir de l'analyse de ces images.

De tels moyens de tracking 150 sont connus de l'homme du métier et sont par exemple décrits dans le document intitulé "Modeling, reconstruction and tracking for face récognition, chapter in Signal and image processing for biometrics" de C. Herold, V. Despiegel, S. Gentric, S. Dubuisson, I. Bloch, (A. Nait-Ali Ed.), pp. 57-88, (ISTE-Wiley), 2012.

Les moyens de positionnement 160 sont prévus pour aligner l'axe d'entrée 106, l'axe de sortie 110 avec l'axe optique 51.

Les moyens d'éclairage 102 présentent une direction d'émission 162 et le moyen de capture 104 présente une direction de réception 164.

Dans le mode de réalisation de l'invention présenté sur la Fig. 1, la direction d'émission 162 et la direction de réception 164 sont orientées sensiblement verticalement.

Pour un individu marchant vers le dispositif de décision 100, l'axe optique 51 est orienté sensiblement horizontalement. Pour rediriger le flux infrarouge émis le long de la direction d'émission 162 selon l'axe d'entrée 106, les moyens de positionnement 160 comportent un socle 168 sur lequel est monté un miroir 166 à 45° disposé à la verticale des moyens d'éclairage 102 et du moyen de capture 104. La mise en place du miroir 166 permet également de rediriger l'image de la macula 53 qui est émise le long de l'axe de sortie 110 selon la direction de réception 164.

Les moyens de positionnement 160 comportent également un moyen de déplacement linéaire 170 prévu pour déplacer linéairement le socle 168 parallèlement à la direction d'émission 162 (double flèche 163). L'unité de calcul 154 commande le moyen de déplacement linéaire 170 en fonction de la direction de l'axe optique 51 qu'elle a déterminée afin d'aligner l'axe optique 51, l'axe d'entrée 106 et l'axe de sortie 110.

Le moyen de déplacement linéaire 170 prend par exemple la forme d'un moteur linéaire qui déplace le socle 168.

Ainsi, en fonction de la hauteur de l'œil 50 relevée par les moyens de tracking 150, les moyens de déplacement linéaire 170 positionnent le miroir 166 à cette hauteur.

Le dispositif de décision 100 est de préférence couplé à ou intégré dans un dispositif d'identification qui, après capture d'une image de l'iris 54 de l'œil 50, compare cette image à des images d'iris de référence si le dispositif de décision 100 a décidé que l'œil 50 est vrai.

Selon un premier mode de réalisation, des moyens d'éclairage infrarouge et un moyen de capture infrarouge supplémentaires et visant l'iris 54 sont ajoutés.

Selon un deuxième mode de réalisation, le dispositif de décision 100 comporte des moyens de décalage 180 commandés par les moyens de tracking 150 et qui sont prévus pour décaler l'axe d'entrée 106 et donc le flux infrarouge émis le long de l'axe d'entrée 106, vers l'iris 54 et non plus vers la macula 53. En d'autres termes, les moyens de décalage 180 sont prévus pour désaligner l'axe d'entrée 106 et l'axe de sortie 110 par rapport à l'axe optique 51, en particulier en dehors du cône de 5° autour de l'axe optique 51, de manière à ce que même si la macula 53 reste partiellement éclairée par un flux infrarouge issu des moyens d'éclairage 102, elle n'est plus vue par le moyen de capture 104.

Pour permettre la capture d'une image de l'iris 54 identifiable par comparaison avec les images d'iris de référence, un flux infrarouge éclaire l'iris 54. C'est-à-dire de manière à sortir l'axe d'entrée 106 du cône à 5°.

Dans le cas d'un vrai œil 50, l'image capturée par le moyen de capture 104 est alors similaire à l'image 300 de la Fig. 3, c'est-à-dire qu'il n'y a plus de zone centrale 204 "grise" du fait que le flux infrarouge qui pourrait se refléter sur la macula 53 n'est plus vu par le moyen de capture 104.

Le décalage de l'axe d'entrée 106 entraîne de la même manière le décalage de l'axe de sortie 110 qui est suivi par le flux infrarouge réfléchi par l'iris 54.

Dans le mode de réalisation de l'invention représenté sur la Fig. 1, le miroir 166 est monté sur le socle 168 par l'intermédiaire d'un moyen de déplacement angulaire 182 comme par exemple un moteur rotatif dont l'axe porte le socle 168 et est ici perpendiculaire au plan contenant l'axe d'entrée 106 et la direction d'émission 162 (double flèche 183). Le moyen de déplacement angulaire 182 constitue les moyens de décalage 180.

L'unité de calcul 154 commande le moyen de déplacement angulaire 182 afin de décaler l'axe d'entrée 106.

Lorsque les moyens de décalage 180 ont décalé l'axe d'entrée 106, le moyen de capture 104 capture une image de l'iris 54 que les moyens de traitement 108 peuvent classiquement traiter et comparer aux images d'iris de référence si l'œil 50 a bien été détecté comme un vrai œil.

Pour permettre la capture de plusieurs images par le moyen de capture 104, aussi bien de la macula 53 éclairée que de l'iris 54 éclairé, l'unité de calcul 154 commande le déplacement des moyens de décalage 180 de manière alternative et successive.

Le déplacement de l'axe d'entrée 106 et la capture d'une image permettent en outre une double décision du fait que l'œil 50 est un vrai œil ou un faux œil. En effet, ce déplacement et cette capture permettent de vérifier que l'œil 50 n'est pas un faux œil sur lequel une tache rouge représentative d'une macula 53 a été peinte.

En effet, avec un tel faux œil 50, l'éclairement dans l'alignement de l'axe optique 51 génère une zone centrale 204 de couleur "grise" imitant la présence d'une macula 53, mais l'éclairement en dehors de l'alignement de l'axe optique 51 génère également une zone centrale 204 de couleur "grise" du fait que la tache rouge est également au moins en partie éclairée par le flux infrarouge et réfléchit ce flux infrarouge.

Le logiciel permettant de détecter les couleurs précédemment décrit peut être utilisé.

Pour éviter la dégradation de l'œil 50 sous l'effet du flux infrarouge, celui-ci est pulsé.

Selon un mode de réalisation particulier, la capture des images s'effectue dans un intervalle de 80 cm à 2 m de distance du dispositif de décision 100.

Selon un autre mode de réalisation de l'invention, les moyens d'éclairage 102 et le moyen de capture 104 peuvent être disposés sur le socle 168 à la place du miroir 166 et orientés de manière à présenter la direction d'émission 162 et la direction de réception 164 orientées horizontalement vers l'individu et ainsi se confondre respectivement avec l'axe d'entrée 106 et l'axe de sortie 110. Le moyen de déplacement linéaire 170 et le moyen de déplacement angulaire 182 agissent alors directement sur les moyens d'éclairage 102 et le moyen de capture 104.

La Fig. 4 montre un organigramme d'un procédé de décision 400 selon un premier mode de réalisation de l'invention et qui comporte:
- une étape d'alignement 402 au cours de laquelle l'axe d'entrée 106 et l'axe de sortie 110 sont alignés avec l'axe optique 51 tel qu'un éclairement de la macula 53 sous l'incidence de l'axe d'entrée 106 est vu par le moyen de capture 104,
- une étape d'éclairage 404 au cours de laquelle les moyens d'éclairage 102 éclairent l'œil 50 en suivant l'axe d'entrée 106,
- une étape de capture 406 au cours de laquelle le moyen de capture 104 capture une image 200, 300 de la zone de l'œil 50 ainsi éclairée,
- une étape de traitement 408 au cours de laquelle les moyens de traitement 108 détectent sur une image 200, 300 si une zone périphérique 202 représentative de l'iris 54 existe et si une zone centrale 204 à l'intérieur de la zone périphérique 202 et dont la couleur est représentative de l'existence de la macula 53 existe, et délivrent une information représentative de cette détection, et
- une étape de décision 410 au cours de laquelle les moyens de décision 109 décident si l'œil 50 est vrai ou faux en fonction de l'information délivrée par les moyens de traitement 108.

Dans le cas d'un œil 50 immobile, l'étape d'alignement 402 s'effectue par la mise en place de l'œil 50 et son maintien en position devant le dispositif de décision 100.

Dans le cas d'une décision à la volée, l'étape d'alignement 402 consiste, pour les moyens de tracking 150, en une étape de suivi du visage, une étape de localisation d'un œil 50 de ce visage ainsi suivi, et une étape de détermination de la direction de l'axe optique 51 de cet œil 50, et suivi pour les moyens de positionnement 160 par une étape de positionnement au cours de laquelle les moyens de positionnement 160 alignent l'axe d'entrée 106 et l'axe de sortie 110 avec l'axe optique 51.

L'étape d'alignement 402 consiste à aligner l'axe d'entrée 106 et l'axe de sortie 110 avec l'axe optique 51, c'est-à-dire à l'intérieur du cône de 5° autour de l'axe optique 51.

L'étape de traitement 408 délivre une information positive si la présence d'une zone périphérique 202 représentative de l'iris 54 et la présence d'une zone centrale 204 de couleur appropriée à celle attendue dans le cas de l'existence d'une macula 53 sont détectées sur l'image 200 capturée. L'étape de traitement 408 délivre une information négative si la présence d'une zone périphérique 202 représentative de l'iris 54 ou la présence d'une zone centrale 204 de couleur appropriée à celle attendue dans le cas de l'existence d'une macula 53 n'est pas détectée sur l'image 300 capturée.

La Fig. 5 montre un organigramme d'un procédé de décision 500 selon un deuxième mode de réalisation de l'invention, qui correspond au cas où le dispositif de décision 100 comporte des moyens de décalage 180 et qu'une double décision est prise.

Le procédé de décision 500 comporte:
- une étape de tracking 520 au cours de laquelle les moyens de tracking 150 suivent un visage d'un individu passant devant le dispositif de décision 100, plus particulièrement les moyens d'éclairage 102 et le moyen de capture 104, localisent un œil 50 de ce visage et déterminent la direction de l'axe optique 51 de cet œil 50,
- une étape d'alignement 402 au cours de laquelle les moyens de positionnement 160 alignent l'axe d'entrée 106 et l'axe de sortie 110 avec l'axe optique 51 tel qu'un éclairement de la macula 53 par les moyens d'éclairage 102 sous l'incidence de l'axe d'entrée 106 est vu par le moyen de capture 104, c'est-à-dire que l'axe d'entrée 106 et l'axe de sortie 110 sont dans le cône de 5° autour de l'axe optique 51,
- une première étape d'éclairage 404 au cours de laquelle les moyens d'éclairage 102 éclairent l'œil 50,
- une première étape de capture 406 au cours de laquelle le moyen de capture 104 capture une image 200, 300 de la zone de l'œil 50 ainsi éclairée,
- une première étape de traitement 408 au cours de laquelle les moyens de traitement 108 analysent une image 200, 300 ainsi capturée pour détecter si une zone périphérique 202 représentative de l'iris 54 existe et si une zone centrale 204 à l'intérieur de la zone périphérique 202 et dont la couleur est représentative de l'existence de la macula 53 existe, et délivrent une première information représentative de cette détection,
- une étape de désalignement 502 au cours de laquelle les moyens de décalage 180 décalent l'axe d'entrée 106 et l'axe de sortie 110 de l'axe optique 51 de manière à ce que même si la macula 53 reste partiellement éclairée par un flux infrarouge issu des moyens d'éclairage 102, elle n'est plus vue par le moyen de capture 104, c'est-à-dire que l'axe d'entrée 106 et l'axe de sortie 110 ne sont pas dans le cône de 5° autour de l'axe optique 51,
- une deuxième étape d'éclairage 504 au cours de laquelle les moyens d'éclairage 102 éclairent l'œil 50 en suivant l'axe d'entrée 106,
- une deuxième étape de capture 506 au cours de laquelle le moyen de capture 104 capture une image de la zone de l'œil 50 ainsi éclairée,
- une deuxième étape de traitement 508 au cours de laquelle les moyens de traitement 108 analysent une image ainsi capturée pour détecter si une zone périphérique 202 représentative de l'iris 54 existe et si une zone centrale 204 à l'intérieur de la zone périphérique 202 et dont la couleur est représentative de l'existence de la macula 53 existe, et délivrent une deuxième information représentative de cette détection, et
- une étape de décision 510 au cours de laquelle les moyens de décision 109 décident si l'œil 50 est vrai ou faux en fonction de la première information et la deuxième information délivrées par les moyens de traitement 108.

La présence d'un vrai œil 50 est validée si, d'une part, la première étape de traitement 408 délivre une première information positive et si, d'autre part, la deuxième étape de traitement 508 délivre une deuxième information négative, et est invalidée si la première étape de traitement 408 délivre une première information négative ou si la deuxième étape de traitement 508 délivre une deuxième information positive.

Chaque étape de traitement 408, 508 délivre une information positive si la présence d'une zone périphérique 202 représentative de l'iris 54 et la présence d'une zone centrale 204 de couleur appropriée à celle attendue dans le cas de l'existence d'une macula 53 sont détectées sur l'image 200 capturée.

Chaque étape de traitement 408, 508 délivre une information négative si la présence d'une zone périphérique 202 représentative de l'iris 54 ou la présence d'une zone centrale 204 de couleur appropriée à celle attendue dans le cas de l'existence d'une macula 53 n'est pas détectée sur l'image 300 capturée.

Bien entendu, la présente invention n'est pas limitée aux exemples et modes de réalisation décrits et représentés, mais elle est susceptible de nombreuses variantes accessibles à l'homme de l'art et comprises dans le cadre des revendications.

## Revendications

1. Dispositif de décision (100) prévu pour décider si un œil (50) présentant une macula (53) et un axe optique (51) est vrai ou faux, ledit dispositif de décision (100) comportant :
- des moyens d'éclairage (102) émettant vers l'œil (50) un flux infrarouge selon un axe d'entrée (106),
- un moyen de capture infrarouge (104) prévu pour capturer une image de l'œil (50) selon un axe de sortie (110), l'axe d'entrée (106) et l'axe de sortie (110) étant alignés avec l'axe optique (51) tel que la macula (53) éclairée par les moyens d'éclairage (102) sous l'incidence de l'axe d'entrée (106) est vue par le moyen de capture (104),
- des moyens de traitement (108) prévus pour détecter, sur une image capturée (200, 300) par le moyen de capture (104), si une zone périphérique (202) représentative de l'iris (54) existe et si une zone centrale (204) à l'intérieur de la zone périphérique (202) et dont la couleur est représentative de l'existence de la macula (53) existe, et pour délivrer une information représentative de cette détection, et
- des moyens de décision (109) prévus pour décider si l'œil (50) est vrai ou faux en fonction de l'information délivrée par les moyens de traitement (108).

2. Dispositif de décision (100) selon la revendication 1, **caractérisé en ce qu'**il comporte en outre, des moyens de tracking (150) prévus pour suivre un visage d'un individu passant devant les moyens d'éclairage (102) et le moyen de capture (104), pour localiser un œil (50) de ce visage et déterminer la direction de l'axe optique (51) de cet œil (50), et des moyens de positionnement (160) commandés par les moyens de tracking (150) et prévus pour aligner l'axe d'entrée (106), l'axe de sortie (110) avec l'axe optique (51).

3. Dispositif de décision (100) selon la revendication 2, **caractérisé en ce qu'**il comporte en outre des moyens de décalage (180) commandés par les moyens de tracking (150) et prévus pour décaler l'axe d'entrée (106) et l'axe de sortie (110) par rapport à l'axe optique (51) de manière à ce que même si la macula (53) reste partiellement éclairée par les moyens d'éclairage (102), elle n'est plus vue par le moyen de capture (104).

4. Dispositif de décision (100) selon la revendication 3, **caractérisé en ce que** les moyens d'éclairage (102) présentent une direction d'émission (162), **en ce que** le moyen de capture (104) présente une direction de réception (164), **en ce que** la direction d'émission (162) et la direction de réception (164) sont verticales, **en ce que** l'axe optique (51) est horizontal, **en ce que** les moyens de positionnement (160) comportent, d'une part, un socle (168) sur lequel est monté un miroir (166) à 45° disposé à la verticale des moyens d'éclairage (102) et du moyen de capture (104), et, d'autre part, un moyen de déplacement linéaire (170) prévu pour déplacer linéairement le socle (168) parallèlement à la direction d'émission (162), et **en ce que** les moyens de décalage (180) comportent un moyen de déplacement angulaire (182) monté sur le socle (168) et portant le miroir (166).

5. Procédé de décision (400) prévu pour décider si un œil (50) présentant une macula (53) et un axe optique (51) est vrai ou faux et mis en œuvre par un dispositif de décision (100) comportant des moyens d'éclairage (102) émettant un flux infrarouge selon un axe d'entrée (106), un moyen de capture infrarouge (104) prévu pour capturer une image selon un axe de sortie (110), des moyens de traitement (108), et des moyens de décision (109), ledit procédé de décision (400) comportant:
- une étape d'alignement (402) au cours de laquelle l'axe d'entrée (106) et l'axe de sortie (110) sont alignés avec l'axe optique (51) tel qu'un éclairement de la macula (53) par les moyens d'éclairage (102) sous l'incidence de l'axe d'entrée (106) est vu par le moyen de capture (104),
- une étape d'éclairage (404) au cours de laquelle les moyens d'éclairage (102) éclairent l'œil (50),
- une étape de capture (406) au cours de laquelle le moyen de capture (104) capture une image (200, 300) de la zone de l'œil (50) ainsi éclairée,
- une étape de traitement (408) au cours de laquelle les moyens de traitement (108) détectent sur une image (200, 300) ainsi capturée, si une zone périphérique (202) représentative de l'iris (54) existe et si une zone centrale (204) à l'intérieur de la zone périphérique (202) et dont la couleur est représentative de l'existence de la macula (53) existe, et délivrent une information représentative de cette détection, et
- une étape de décision (410) au cours de laquelle les moyens de décision (109) décident si l'œil (50) est vrai ou faux en fonction de l'information délivrée par les moyens de traitement (108).

6. Procédé de décision (400) selon la revendication 5, **caractérisé en ce que** lorsque le dispositif de décision (100) comporte des moyens de tracking (150) et des moyens de positionnement (160) commandés par les moyens de tracking (150), l'étape d'alignement (402) consiste en une étape de suivi du visage, une étape de localisation d'un œil (50) de ce visage ainsi suivi, une étape de détermination de la direction de l'axe optique (51) de cet œil (50), et une étape de positionnement au cours de laquelle les moyens de positionnement (160) alignent l'axe d'entrée (106) et l'axe de sortie (110) avec l'axe optique (51).

7. Procédé de décision (500) selon la revendication 6, **caractérisé en ce que** le dispositif de décision (100) comporte en outre des moyens de décalage (180) commandés par les moyens de tracking (150) et **en ce que** ledit procédé de décision (500) comporte après l'étape de traitement (408) :
- une étape de désalignement (502) au cours de laquelle les moyens de décalage (180) décalent l'axe d'entrée (106) et l'axe de sortie (110) de l'axe optique (51) de manière à ce que même si la macula (53) reste partiellement éclairée par les moyens d'éclairage (102), elle n'est plus vue par le moyen de capture (104),
- une deuxième étape d'éclairage (504) au cours de laquelle les moyens d'éclairage (102) éclairent l'œil (50),
- une deuxième étape de capture (506) au cours de laquelle le moyen de capture (104) capture une image de la zone de l'œil (50) ainsi éclairée,
- une deuxième étape de traitement (508) au cours de laquelle les moyens de traitement (108) détectent sur une image ainsi capturée si une zone périphérique (202) représentative de l'iris (54) existe et si une zone centrale (204) à l'intérieur de la zone périphérique (202) et dont la couleur est représentative de l'existence de la macula (53) existe, et délivrent une deuxième information représentative de cette détection, et **en ce qu'**au cours de l'étape de décision (510) les moyens de décision (109) décident si l'œil (50) est vrai ou faux en fonction de ladite information et de ladite deuxième information délivrées par les moyens de traitement (108).

## Patentansprüche

1. Entscheidungsvorrichtung (100), die dazu bestimmt ist zu entscheiden, ob ein Auge (50), das eine Makula (53) und eine optische Achse (51) aufweist, echt oder unecht ist, wobei die Entscheidungsvorrichtung (100) Folgendes umfasst:
- Beleuchtungsmittel (102), die gemäß einer Eintrittsachse (106) einen Infrarotstrom zu dem Auge (50) hin emittieren,
- ein Infraroterfassungsmittel (104), das dazu bestimmt ist, ein Bild des Auges (50) gemäß einer Austrittsachse (110) zu erfassen, wobei die Eintrittsachse (106) und die Austrittsachse (110) nach der optischen Achse (51) ausgerichtet sind, sodass die Makula (53), die unter dem Einfallswinkel der Eintrittsachse (106) durch die Beleuchtungsmittel (102) beleuchtet wird, durch das Erfassungsmittel (104) gesehen wird,
- Verarbeitungsmittel (108), die dazu bestimmt sind, auf einem durch das Erfassungsmittel (104) erfassten Bild (200, 300) zu erkennen, ob ein für die Iris (54) repräsentativer Randbereich (202) existiert und ob ein zentraler Bereich (204) innerhalb des Randbereichs (202), dessen Farbe für die Existenz der Makula (53) repräsentativ ist, existiert, und eine für diese Erkennung repräsentative Information bereitzustellen, und
- Entscheidungsmittel (109), die dazu bestimmt sind, in Abhängigkeit von der durch die Verarbeitungsmittel (108) bereitgestellten Information zu entscheiden, ob das Auge (50) echt oder unecht ist.

2. Entscheidungsvorrichtung (100) nach Anspruch 1, **dadurch gekennzeichnet, dass** sie ferner Folgendes umfasst: Nachverfolgungsmittel (150), die dazu bestimmt sind, einem Gesicht einer Person, die vor den Beleuchtungsmitteln (102) und dem Erfassungsmittel (104) vorbeigeht, zu folgen, um ein Auge (50) dieses Gesichts zu lokalisieren und die Richtung der optischen Achse (51) dieses Auges (50) zu bestimmen, und Positionierungsmittel (160), die durch die Nachverfolgungsmittel (150) gesteuert werden und dazu bestimmt sind, die Eintrittsachse (106), die Austrittsachse (110) nach der optischen Achse (51) auszurichten.

3. Entscheidungsvorrichtung (100) nach Anspruch 2, **dadurch gekennzeichnet, dass** sie ferner Verschiebungsmittel (180) umfasst, die durch die Nachverfolgungsmittel (150) gesteuert werden und dazu bestimmt sind, die Eintrittsachse (106) und die Austrittsachse (110) mit Bezug auf die optische Achse (51) so zu verschieben, dass selbst wenn die Makula (53) durch die Beleuchtungsmittel (102) teilweise beleuchtet bleibt, sie nicht mehr durch das Erfassungsmittel (104) gesehen wird.

4. Entscheidungsvorrichtung (100) nach Anspruch 3, **dadurch gekennzeichnet, dass** die Beleuchtungsmittel (102) eine Emissionsrichtung (162) aufweisen, dass das Erfassungsmittel (104) eine Empfangsrichtung (164) aufweist, dass die Emissionsrichtung (162) und die Empfangsrichtung (164) vertikal sind, dass die optische Achse (51) horizontal ist, dass die Positionierungsmittel (160) einerseits eine Basis (168), an der ein Spiegel (166) um 45° zu der Vertikalen der Beleuchtungsmittel (102) und des Erfassungsmittels (104) versetzt montiert ist, und andererseits ein Linearverlagerungsmittel (170), das dazu bestimmt ist, die Basis (168) linear parallel zu der Emissionsrichtung (162) zu verlagern, umfassen und dass die Verschiebungsmittel (180) ein Winkelverlagerungsmittel (182) umfassen, das an der Basis (168) montiert ist und den Spiegel (166) trägt.

5. Entscheidungsverfahren (400), das dazu bestimmt ist zu entscheiden, ob ein Auge (50), das eine Makula (53) und eine optische Achse (51) aufweist, echt oder unecht ist, und das durch eine Entscheidungsvorrichtung (100) umgesetzt wird, die Beleuchtungsmittel (102), die gemäß einer Eintrittsachse (106) einen Infrarotstrom emittieren, ein Infraroterfassungsmittel (104), das dazu bestimmt ist, ein Bild gemäß einer Austrittsachse (110) zu erfassen, Verarbeitungsmittel (108) und Entscheidungsmittel (109) umfasst, wobei das Entscheidungsverfahren (400) Folgendes umfasst:
- einen Ausrichtungsschritt (402), während dessen die Eintrittsachse (106) und die Austrittsachse (110) nach der optischen Achse (51) ausgerichtet werden, sodass eine Ausleuchtung der Makula (53) durch die Beleuchtungsmittel (102) unter dem Einfallswinkel der Eintrittsachse (106) durch das Erfassungsmittel (104) gesehen wird,
- einen Beleuchtungsschritt (404), während dessen die Beleuchtungsmittel (102) das Auge (50) beleuchten,
- einen Erfassungsschritt (406), während dessen das Erfassungsmittel (104) ein Bild (200, 300) des so beleuchteten Bereichs des Auges (50) erfasst,
- einen Verarbeitungsschritt (408), während dessen die Verarbeitungsmittel (108) auf einem so erfassten Bild (200, 300) erkennen, ob ein für die Iris (54) repräsentativer Randbereich (202) existiert und ob ein zentraler Bereich (204) innerhalb des Randbereichs (202), dessen Farbe für die Existenz der Makula (53) repräsentativ ist, existiert, und eine für diese Erkennung repräsentative Information bereitstellen, und
- einen Entscheidungsschritt (410), während dessen die Entscheidungsmittel (109) in Abhängigkeit von der durch die Verarbeitungsmittel (108) bereitgestellten Information entscheiden, ob das Auge (50) echt oder unecht ist.

6. Entscheidungsverfahren (400) nach Anspruch 5, **dadurch gekennzeichnet, dass**, wenn die Entscheidungsvorrichtung (100) Nachverfolgungsmittel (150) und durch die Nachverfolgungsmittel (150) gesteuerte Positionierungsmittel (160) umfasst, der Ausrichtungsschritt (402) aus Folgendem besteht: einem Schritt des Folgens des Gesichts, einem Schritt des Lokalisierens eines Auges (50) dieses so verfolgten Gesichts, einem Schritt des Bestimmens der Richtung der optischen Achse (51) dieses Auges (50) und einem Positionierungsschritt, während dessen die Positionierungsmittel (160) die Eintrittsachse (106) und die Austrittsachse (110) nach der optischen Achse (51) ausrichten.

7. Entscheidungsverfahren (500) nach Anspruch 6, **dadurch gekennzeichnet, dass** die Entscheidungsvorrichtung (100) ferner Verschiebungsmittel (180), die durch die Nachverfolgungsmittel (150) gesteuert werden, umfasst und dass das Entscheidungsverfahren (500) nach dem Verarbeitungsschritt (408) Folgendes umfasst:
- einen Verstellungsschritt (502), während dessen die Verschiebungsmittel (180) die Eintrittsachse (106) und die Austrittsachse (110) mit Bezug auf die optische Achse (51) so verstellen, dass selbst wenn die Makula (53) durch die Beleuchtungsmittel (102) teilweise beleuchtet bleibt, sie nicht mehr durch das Erfassungsmittel (104) gesehen wird,
- einen zweiten Beleuchtungsschritt (504), während dessen die Beleuchtungsmittel (102) das Auge (50) beleuchten,
- einen zweiten Erfassungsschritt (506), während dessen das Erfassungsmittel (104) ein Bild des so beleuchteten Bereichs des Auges (50) erfasst,
- einen zweiten Verarbeitungsschritt (508), während dessen die Verarbeitungsmittel (108) auf einem so erfassten Bild erkennen, ob ein für die Iris (54) repräsentativer Randbereich (202) existiert und ob ein zentraler Bereich (204) innerhalb des Randbereichs (202), dessen Farbe für die Existenz der Makula (53) repräsentativ ist, existiert, und eine für diese Erkennung repräsentative zweite Information bereitstellen, und dass während des Entscheidungsschritts (510) die Entscheidungsmittel (109) in Abhängigkeit von der durch die Verarbeitungsmittel (108) bereitgestellten Information und zweiten Information entscheiden, ob das Auge (50) echt oder unecht ist.

## Claims

1. Deciding device (100) intended to decide whether an eye (50) having a macula (53) and an optical axis (51) is genuine or fake, said deciding device (100) comprising:
- illuminating means (102) that emit towards the eye (50) an infrared flux along an entrance axis (106),
- a means (104) for capturing infrared, intended to capture an image of the eye (50) along an exit axis (110), the entrance axis (106) and the exit axis (110) being aligned with the optical axis (51) such that the macula (53) illuminated by the illuminating means (102) under the incidence of the entrance axis (106) is seen by the capturing means (104),
- processing means (108) intended to detect, in an image (200, 300) captured by the capturing means (104), whether a peripheral region (202) representative of the iris (54) exists and whether a central region (204) inside the peripheral region (202) and the colour of which is representative of the existence of the macula (53) exists, and to deliver a datum representative of this detection, and
- deciding means (109) intended to decide whether the eye (50) is genuine or fake depending on the datum delivered by the processing means (108).

2. Deciding device (100) according to Claim 1, **characterized in that** it furthermore comprises tracking means (150) intended to track a face of an individual passing in front of the lighting means (102) and the capturing means (104), with a view to locating an eye (50) of this face and to determining the direction of the optical axis (51) of this eye (50), and positioning means (160) that are controlled by the tracking means (150) and that are intended to align the entrance axis (106) and the exit axis (110) with the optical axis (51).

3. Deciding device (100) according to Claim 2, **characterized in that** it furthermore comprises shifting means (180) that are controlled by the tracking means (150) and that are intended to shift the entrance axis (106) and the exit axis (110) with respect to the optical axis (51) so that, even if the macula (53) remains partially illuminated by the illuminating means (102), it is no longer seen by the capturing means (104).

4. Deciding device (100) according to Claim 3, **characterized in that** the illuminating means (102) have an emission direction (162), **in that** the capturing means (104) have a reception direction (164), **in that** the emission direction (162) and the reception direction (164) are vertical, **in that** the optical axis (51) is horizontal, **in that** the positioning means (160) comprise, on the one hand, a holder (168) on which is mounted a mirror (166) at 45° placed plumb with the lighting means (102) and the capturing means (104), and, on the other hand, a linearly moving means (170) intended to move the holder (168) linearly parallel to the emission direction (162), and **in that** the shifting means (108) comprise an angularly moving means (182) mounted on the holder (168) and bearing the mirror (166).

5. Deciding method (400) intended to decide whether an eye (50) having a macula (53) and an optical axis (51) is genuine or fake, and implemented by a deciding device (100) comprising illuminating means (102) that emit an infrared flux along an entrance axis (106), a means (104) for capturing infrared, intended to capture an image along an exit axis (110), processing means (108), and deciding means (109), said deciding method (400) comprising:
- an aligning step (402) in which the entrance axis (106) and the exit axis (110) are aligned with the optical axis (51) such that an illumination of the macula (53) by the illuminating means (102) under the incidence of the entrance axis (106) is seen by the capturing means (104),
- an illuminating step (404) in which the illuminating means (102) illuminate the eye (50),
- a capturing step (406) in which the capturing means (104) capture an image (200, 300) of the region thus illuminated of the eye (50),
- a processing step (408) in which the processing means (108) detect, in an image (200, 300) thus captured, whether a peripheral region (202) representative of the iris (54) exists and whether a central region (204) inside the peripheral region (202) and the colour of which is representative of the existence of the macula (53) exists, and deliver a datum representative of this detection, and
- a deciding step (410) in which the deciding means (109) decide whether the eye (50) is genuine or fake depending on the datum delivered by the processing means (108).

6. Deciding method (400) according to Claim 5, **characterized in that**, when the deciding device (100) comprises tracking means (150) and positioning means (160) that are controlled by the tracking means (150), the aligning step (402) consists in a step of tracking the face, a step of locating an eye (50) of this face thus tracked, a step of determining the direction of the optical axis (51) of this eye (50), and a positioning step in which the positioning means (160) align the entrance axis (106) and the exit axis (110) with the optical axis (51).

7. Deciding method (500) according to Claim 6, **characterized in that** the deciding device (100) furthermore comprises shifting means (180) that are controlled by the tracking means (150) and **in that** said deciding method (500) comprises, after the processing step (408):
- a misaligning step (502) in which the shifting means (180) shift the entrance axis (106) and the exit axis (110) of the optical axis (51) so that, even if the macula (53) remains partially illuminated by the illuminating means (102), it is no longer seen by the capturing means (104),
- a second illuminating step (504) in which the illuminating means (102) illuminate the eye (50),
- a second capturing step (506) in which the capturing means (104) capture an image of the region thus illuminated of the eye (50),
- a second processing step (508) in which the processing means (108) detect, in an image thus captured, whether a peripheral region (202) representative of the iris (54) exists and whether a central region (204) inside the peripheral region (202) and the colour of which is representative of the existence of the macula (53) exists, and deliver a second datum representative of this detection, and **in that**, in the deciding step (510), the deciding means (109) decide whether the eye (50) is genuine or fake depending on said datum and said second datum delivered by the processing means (108).
